# EUROPEAN PATENT APPLICATION

(11) **EP 1 492 284 A1**
(43) Date of publication of application: **29.12.2004**
(21) Application number: 03101905.2
(22) Date of filing: 26.06.2003
(51) Int. Cl.: H04L 12/64

(54) **A method and apparatus for a single channel, physical-line-based and transparent information transfer**

(71) Applicant: Genexis B.V., 6105 BP Maria Hoop (NL)
(72) Inventor: Spiekman, Leonard Henri, 5646 HP Eindhoven (NL); Crijns, Johannes Jacobus Jozephus, 5212 XE 's-Hertogenbosch (NL); van den Hoven, Gerard Nicolaas, 6105 BP Maria Hoop (NL)
(74) Representative: Smeets, Eugenius Theodorus J. M.

(57) **Abstract**

A transfer organization provides a physical-line-based and transparent information transfer facility to distributed information receivers, whilst supporting such transfer for both first packaged data derived from sampling a real-time telephone signal and second packaged data originating from a broadband digital data service.

In particular, the method comprises the following steps. First, respective actual transfer requirements are ascertained for the first and second packaged data. Next, transferring of the first packaged data is temporally positioned in first time slots that maintain real-time transferring of the first packaged data relative to the real-time telephone signal. Finally, second packaged data are temporally positioned in intermediate intervals between successive first time slots, whilst transferring both the first and second packaged data items along the physical line in a deterministic manner within a single channel facility whilst foregoing encapsulation thereof in an overall frame.

## Description

### BACKGROUND OF THE INVENTION

The invention relates to a method and apparatus for providing a physical-line-based and transparent information transfer facility to distributed information receivers. More in particular, the invention provides a fiber-based transfer facility for multiple private homes and similar types of premises that come as being connected in parallel to central but nevertheless distributed offices. Still more in particular, the invention relates to a method as recited in the preamble of Claim 1.

Present day has seen private homes, small offices and the like being provided with multiple information services that compete with each other for the limited interconnection bandwidth available. A cost-saving approach through providing only a single cable, such as a copper wire or optical fiber has been recognized as useful. Various services in question are voice or telephone, a broadband data service such as Internet, Cable Television (CATV), and possibly others. Note that a particular user may select among various different provider entities for receiving a particular single service.

The inventors have recognized a requirement for a transparent path in that the various signals, even if they travel together over the same physical line, are presented in their own native formats at both ends of the physical transfer link. In that case, the link will behave in such manner that each particular service will only see a "simple wire". In particular, the inventors have conceived and practiced an organization wherein no encapsulation in an overall frame with the associated encoding and decoding overhead would be necessary.

Various aspects of the concept of the invention are as follows:

All applicable telecommunication services are supported in their native formats, while the end user needs no set-top boxes or other interfacing hardware.

The signals are presented to the central office in their native formats, which allows direct interfacing of an arbitrary selection among various service providers to a particular user. In many situations, the central office will serve a particular precinct or neighborhood.

The transparent transport system will offer maximum performance for each data signal type. The service provider may independently decide on policy regarding performance levels.

An autonomous distributed management system is feasible. No externally controlled scheduling hardware is needed, and auto-discovery of actual topology is feasible.

Even without an overall frame for transfer control, the transfer remains deterministic, in that necessary buffering length and/or delay can always be calculated in advance.

Although prior art has recognized the necessity for combined transfer of various data services to the consumer premises, the present inventors have arrived at a remarkably low-cost and straightforward solution.

### SUMMARY TO THE INVENTION

In consequence, amongst other things, it is an object of the present invention to provide a transparent, straightforward, low-cost, and unencumbered transfer scheme for the "fiber to the home" and similar single physical-line system concepts, that will guarantee most or all of the above aspects of the concept.

Now therefore, according to one of its aspects, the invention is characterized according to the characterizing part of Claim 1.

The invention also relates to a transmitting apparatus, a receiving apparatus, and an overall transfer system that are arranged for implementing the method as claimed in Claim 1. Further advantageous aspects of the invention are recited in dependent Claims.

### BRIEF DESCRIPTION OF THE DRAWING

These and further features, aspects and advantages of the invention will be discussed more in detail hereinafter with reference to the disclosure of preferred embodiments of the invention, and in particular with reference to the appended Figures that illustrate:
Figure 1, a diagram of a multi-home communication environment;
Figure 2, an artist's impression of an optical communication gateway in a home;
Figure 3, a more specific diagram of facilities in a central office and a particular home;
Figure 4, a block diagram of a part of the environment of Figure 3;
Figure 5, a first preferred embodiment of the setup in a central office;
Figure 6, a second preferred embodiment of the setup in a central office and in a home, respectively;
Figure 7, a combination embodiment of Figures 5 and 6;
Figure 8, a temporal example of the multiplexing of voice and data frames;
Figure 9, an exemplary temporal arrangement of transferring multiple voice channels;
Figure 10, a different view of the transfer pathway concept.

### DETAILED DESCRIPTION OF PREFERRED EMBODIMENTS

Now, various aspects of the invention will implement the transparent path concept through appropriate development details, as follows:

A multiplexing technique that combines the asynchronous (e.g., Internet) data packets and the synchronous/real-time sampled voice data on a single wavelength, by enclosing the voice data in an Ethernet packet that is appropriately prioritized. This is done so that synchronous delivery of the voice is guaranteed without unduly burdening the bandwidth available for the asynchronous broadband channel.

An Ethernet addressing scheme will allow the communication gateways on either end of the fiber to communicate with each other without the need to exchange handshake information. This is done by changing the six-byte Ethernet address of the various devices from ***nn:nn:nn:xx:xx:xx*** into ***nn:nn:nn:xx:xx:xy***. Here, the "***nn***" part is a three byte organizationally unique identifier assigned by a central authority, such as IEEE. Generally, the "***xx***" part is a three-byte serial number to be assigned by an apparatus vendor. Now, according to an amending feature of the present invention, "***y***" is a four-bit or hexadecimal item that identifies a particular voice line of a multiple voice line unit. The receiver needs only discern the particular value of "***y***" in a packet to find the voice channel in question. Two opposing gateways will then communicate by ignoring the serial numbers, apart from the value of "***y***". This fully conforms to the Ethernet standard in that such packets are never propagated outside of the transparent path system of the invention.

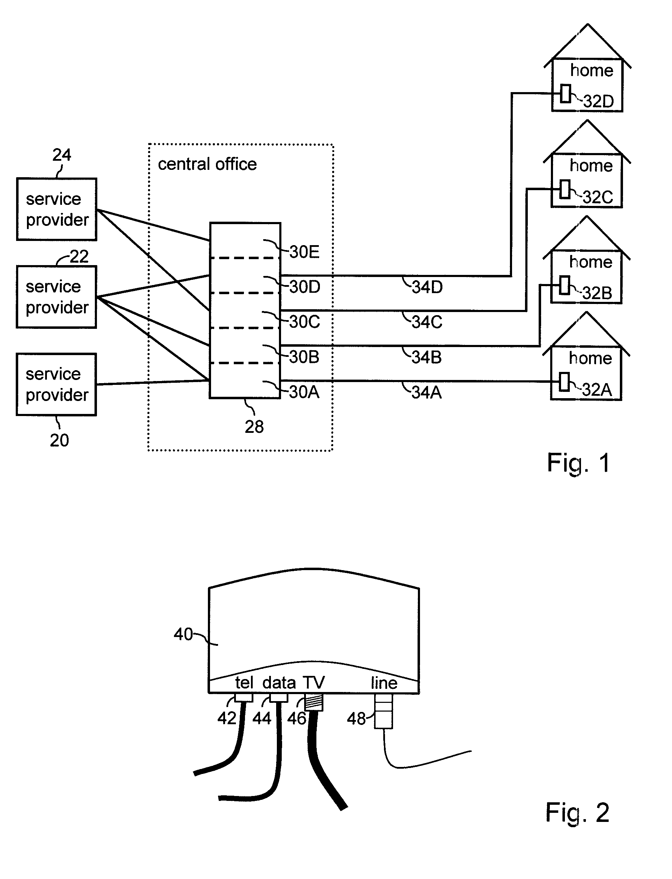

The fibers can be organized on patch panels in multiple layers, such as by grouping them by hundreds in a manner that allows customers to sign up in a random order while being patched to communication gateways (cf. Figure 2) in an orderly manner. Such approach will allow the scaling up of the central office through increasing the number of communication gateways along with more customers signing up, instead of having to install one separate communication gateway for each potential customer from the start.

Figure 1 is a diagram of a multi-home communication environment. Various service providers 20, 22, 24 that may be remote, are shown at left, such as representing the Internet, a voice line from a terrestrial switched telephone network or another voice channel provider, or a cable television feed. These sources feed in a possibly customized interconnection scheme each one of a set of optical communication concentrator cells 30A, 30B, ..., 30E, ..., that collectively constitute optical communication concentrator 28. Each cell is assigned to a respective one of communication gateways 32A, 32B, ..., 32D in the various homes at right, through a respective dedicated glass fiber 34A, 34B, ..., 34D. The Central Office through optical communication concentrator 28 may be serving an appreciable number of customers, such as from a few tens to several thousands or more. The distance covered by glass fibers or copper-based cables 34A, ... is limited by the properties of such physical-lines.

Figure 2 is an artist's impression of an optical communication gateway 40 in a home. The block 40, that may have a size of several inches only, is connected to a dedicated input fiber 48 that represents one of fibers 34A, ... in Figure 1. In many homes the block will be fixed at some appropriate standard location according to national practice, such as in a utility closet (Netherlands: ***meterkast*).** For each appropriate service, the block will have an output plug 42, 44, 46, that will be specific to the service in question and cannot be used for an other service. Persons skilled in the art will know such dedicating. As shown, the services provided are TV, Telephone and Internet.

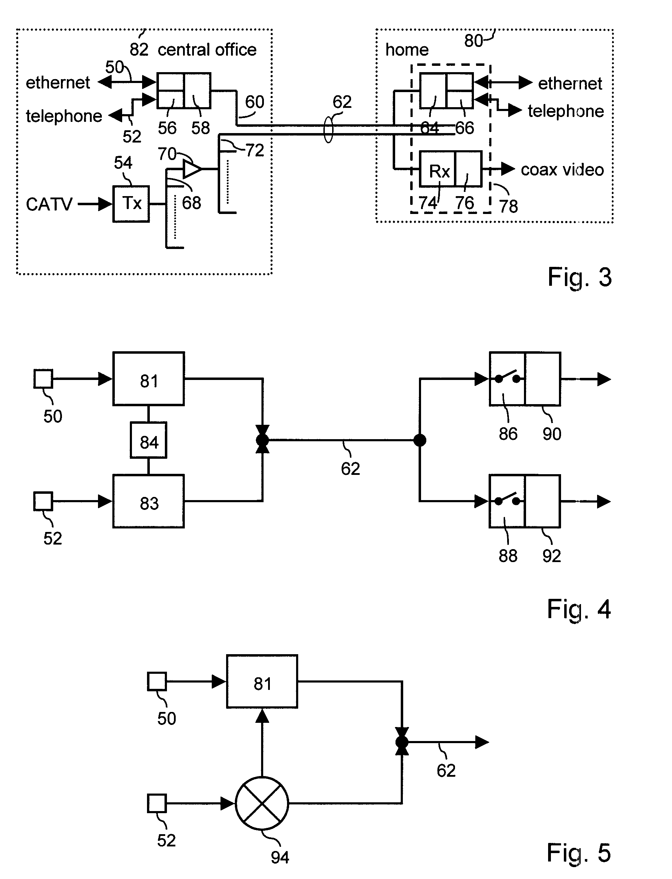

Figure 3 is a more specific diagram of facilities in a central office and in a particular home, respectively. At left, Central Office 82 is fed by digital data such as a 100 MB/s Ethernet facility 50, Telephone facility 52 that may have one or more analog telephone lines through a switch not shown, or rather an ISDN facility, and furthermore a broadband analog television signal, with a frequency band such as 50 - 800 MHz, through a CATV head-end 54. Facilities 50 and 52 are connected to input block 56 and digitized if appropriate, and subsequently multiplexed in multiplexer 58. Next, the digital signals will be collectively (60) transferred through an appropriate carrier in case of a metal-based cable, or within a single-wavelength interval in case of an optical fiber 62 that is connected to home 80. At the home side, demultiplexer 64 will demultiplex Ethernet and telephone signals, and convert the latter through D/A back to analog. Furthermore, block 66 will restructure the telephone information to an analog signal stream for user output, and also output the Ethernet data for immediate user application, if appropriate.

A similar procedure may be followed for transfer in the opposite direction from the "home" back to the Central Office, as pertaining to telephone and data. Note that in particular, Ethernet is full-duplex. Also various protocols to be disclosed hereinafter more in detail as pertaining to the transfer from the Central Office to the home, may be followed likewise for the transfer in the opposite direction from the home to the Central Office. For brevity, the two-way usage of line 62 has not been shown.

The broadband and generally multichannel TV signal from head-end 54 is distributed over an appropriate first number of outputs 68, and if appropriate, after amplification in amplifier 70, over further numbers of outputs 72 that each feed a particular home through an appropriate physical line. Various TV channels at respective different frequencies may be received at a particular home. The transfer of the TV channels through fiber channel 62 will however generally be on one or more different frequency bands from the data emanating from element 58, and will therefore be receptible on one or more different bandpassed filter receivers 74, with linear amplification in element(s) 76 if appropriate. Next, coaxed video will output to a user screen device not shown for simplicity. This completes the description of the necessary facilities 78 provided in user home 80. The various TV channels use one fiber or other physical-line together with the data/telephone. If necessary, of course a separate physical-line could be provided therefor.

Figure 4 is a block diagram of a transmitter part of the environment of Figure 3. First, the transfer requirements for Ethernet 50 and telephone 52 are ascertained in functional blocks 81, 83, respectively. Next, through interaction block 84 that evaluates these respective requirements, the voice packages are placed on line 62 according to express needs that will maintain the real-time character at the receiving side. Furthermore, the Ethernet data packages are interspersed with the voice packages in such manner that the voice packages will get no inappropriate delay, but the data packages will get as much throughput as feasible. The receiver side will recognize voice and data packages and allow entrance thereto through switches 86, 88, respectively. Furthermore, receiver/converting means 90, 92, will respectively convert voice data back to analog voice for user output, and receive the Ethernet data packages for further application by a user.

Figure 5 is a first preferred embodiment of the transfer setup in a central office. For a bi-directional operation, a similar setup will then be present at the "home" side. The packaged voice samples are received through input 52. Termination of transfer of such voice package to output line 62 triggers clock 94, that will count back from an expected maximum delay to the next voice package, to eventually arrive at zero value. The currently expected delay value is then sent to block 81 that again evaluates the transfer requirements of the next Ethernet package. If the latter will fit ***before*** the next voice package, the Ethernet package will be transferred indeed. If the latter will ***not*** fit before such next package, the Ethernet data package will be delayed. At the receiver side (not shown), various telephone and data packages will be routed to the associated target without referencing to any other transfer category. The advantage of this set-up is that ***voice will be transferred immediately without any delay*;** on the other hand, an incurred disadvantage will however be that the delaying of data will effectively ***lower the system transport bandwidth***. When a plurality of different-length Ethernet packages is presently waiting, a selection or choice thereamong may be made to maximize data traffic, for example by transferring those packages out of sequential order, if a later package would fit before the next voice package, whereas an earlier data package would not.

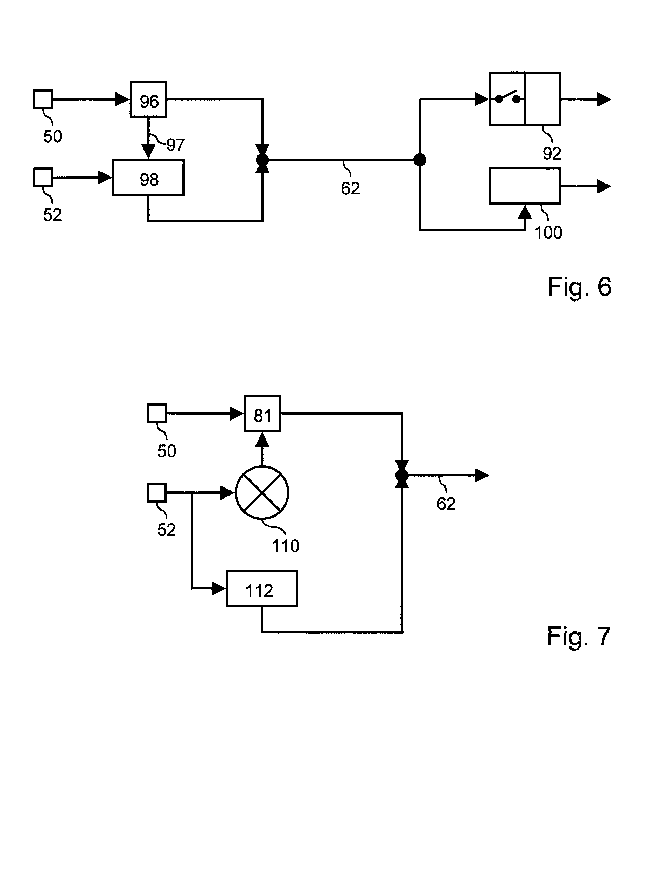

Figure 6 is a second preferred embodiment of the transmitting setup in a central office. Here, an Ethernet package received on input facility 50 will be detected by device 96, and the detection signal sent on line 97 to buffer 98 that has a total length corresponding to the fixed maximum duration of a data packet. A telephone package arriving subsequently will then be stored in buffer 98. Upon subsequent termination of the Ethernet package transfer, the signal on line 97 will say so, and cause buffer 98 to start outputting of the stored voice data. In consequence, buffer 98 may both receive and also output voice signals at the same time and thereby have effectively a variable length. Note that the ***internal*** organization of buffer 98 has not been shown.

At the receiver side, the Ethernet data are received in facility 92 in much the same way as in Figure 4. The voice data will be received in buffer 100 that may have the same physical length as buffer 98. If required, buffer 100, just like buffer 98, can be set to bring about a variable delay to the voice package in such manner that the currently accumulated delay by buffers 98, 100 is always the same. This has been symbolized by the (variable) input tap on buffer 100. Therefore, in the setup of Figure 6, the ***transfer bandwidth is raised*** with respect to the arrangement of Figure 5, at a price of a ***uniform delay of the voice packages.***

It is feasible to design a trade-off between the two solutions in Figures 5 and 6. In this respect, Figure 7 illustrates a combination embodiment of these two Figures. In this embodiment, the maximum voice delay in buffer 112 may be made equal to one half of a data package maximum, whilst data transmission will be allowed when one half of a maximum interval between two successive voice packages is still left as measured by element 110. The receiving side in Figure 7 corresponds to Figure 6, except for the shorter physical length of the receiving buffer (not shown). Note that also here, the process is completely deterministic. Other fractional sizes of the buffer 112 than one half (1/2) of the length of the buffer 98 in Figure 6 could be feasible as well, such as 1/4 or 3/4.

At a Fast Ethernet line speed of 100 Mbit/sec, the maximum Ethernet packet of 1522 Bytes will last only about 122 microseconds, so voice buffering of only one Byte for a voice stream of 8000 Bytes per second would be sufficient. At a Standard Ethernet line speed of 10 Mbits/sec, the maximum waiting time would be 1.2 msec, so a 10 byte buffer would be necessary.

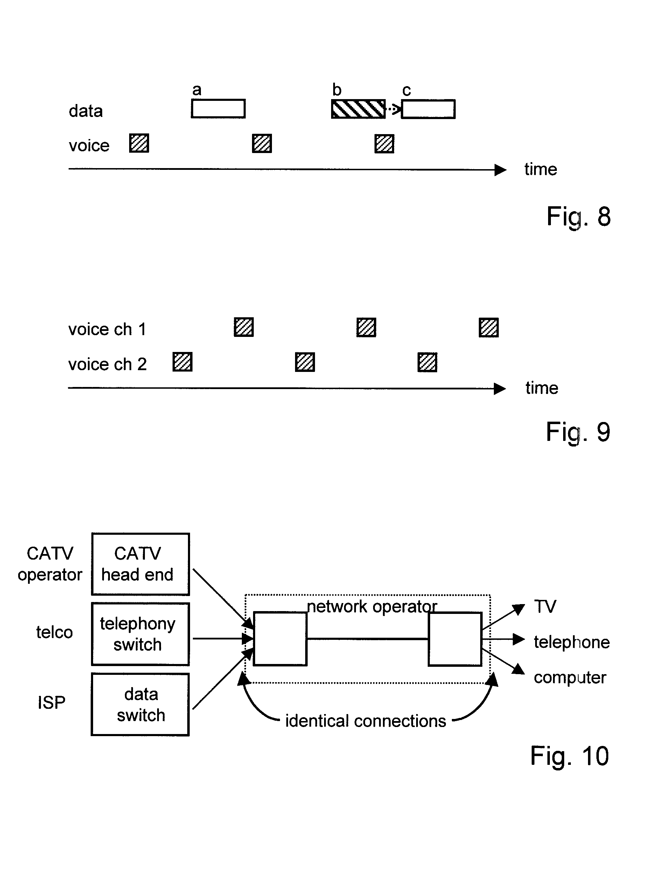

Figure 8 illustrates a temporal example of the multiplexing of voice and data frames. The voice signal may be 8-bit sampled at about 8 kHz, collected in groups of e.g. 32 bytes, and wrapped up in Ethernet frames, which are then padded to the minimum Ethernet data field length of 46 bytes. The link is point-to-point, with only one sender station and one receiver station. No collisions can occur, so the link is run in a full duplex manner; the only particular aspect is that the sender has two data sources, one with data per se, and one with "voice" data. If by way of example, voice frames are sent at a rate of 0.250 kHz or a mutual distance of 4 ms, the occurrence of a next voice frame is exactly predictable. If absence of voice will cause a transient pause in the stream of voice packets, only the first packet upon resumption of the voice cannot be predicted, which will cause only an unperceivable interference.

In a recurrent stream of voice packets, it will show immediately whether a "data" packet (of which the maximum length is 1522 bytes as per the Ethernet standard) will fit before the "next" voice packet. If not, it will have to wait. In a more advanced implementation, a short data packet following a longer data packet frame that is waiting can be sent first, if the shorter frame could be sent before the arrival of the next voice packet. In the Figure, the lightly hatched voice frames are being sent periodically. Data frame "a" shown in white can be transmitted upon arrival, whereas darker hatched data frame "b" is delayed until transmittal is allowed as shown through "c" in white.

Figure 9 illustrates an exemplary temporal arrangement of transferring multiple voice channels ch 1, ch 2. Here, they are synchronized at the transmitter side in order not to overlap in time. Again, the interval between two successive voice packets (from a single, or rather from multiple telephone channels) can be used for transferring a data packet. In certain situations, the presence of multiple voice channels will shift the optimum of the trade-off between voice buffering (Figure 6) and data buffering (Figure 5). Anyway, the receiving end should know to which voice channel or telephone line a particular frame belongs. The label in question can be put inside the frame's data field, but other solutions are feasible as well. Note that the intervals between the voice packets of Figure 9 are represented in their own scale that should not be compared with Figure 8.

Figure 10 illustrates a different view of the transfer pathway concept. At left are the service providers that connect to the transparent pathway. In fact, they need no longer worry how to get their services in the homes, and can concentrate on their core business. In fact, their physical connection pattern to a particular physical-line mimics the situation at the user's premises, so that the connection in the central office may be termed a virtual representation of that user's site.

Now, the present invention has hereabove been disclosed with reference to preferred embodiments thereof. Persons skilled in the art will recognize that numerous modifications and changes may be made thereto without exceeding the scope of the appended Claims. In consequence, the embodiments should be considered as being illustrative, and no restriction should be construed from those embodiments, other than as have been recited in the Claims.

## Claims

1. A method for providing a physical-line-based and transparent information transfer facility to distributed information receivers, whilst supporting such transfer for both first packaged data derived from sampling a real-time telephone signal and second packaged data originating from a broadband digital data service,
said method being **characterized by** comprising the steps of:
ascertaining respective actual transfer requirements for said first and second packaged data,
temporally positioning of transferring said first packaged data in first time slots that maintain real-time transferring of said first packaged data relative to said real-time telephone signal;
temporally positioning said second packaged data in intermediate intervals between successive said first time slots;
and transferring both said first and second packaged data items along said physical line in a deterministic manner within a single channel facility whilst foregoing encapsulation thereof in an overall frame.

2. A method as claimed in Claim 1, wherein said physical line is a fiber and said channel facility is represented by a single wavelength band.

3. A method as claimed in Claim 1, wherein said first packaged data items have minimum temporal spacings that allow at least one second packaged data item therebetween, and wherein said method comprises inhibiting transfer of such second packaged data item when a next first packaged data item is expected to leave a shorter time slot remaining than necessary for such second packaged data item, but terminating such inhibiting by triggering transfer of such second package data item when a first packaged data item that may be presently in transfer will have terminated.

4. A method as claimed in Claim 3, whilst in case of a plurality of second packaged data items of respective different lengths actually requiring transfer before a next first packaged data item, overcoming said inhibiting through selecting a relatively shorter second packaged data item for temporal preference over an inhibited longer second packaged data item.

5. A method as claimed in Claim 1, wherein said second package data items are subject to a maximum length restriction, and said method providing a delay facility for delaying said first packaged data items with a maximum delay interval corresponding to said maximum length restriction, whilst triggering transfer of a said first packaged data item upon terminating transfer of an actual second packaged data item through adjusting an instantaneous delay value of said delay facility below said maximum delay interval.

6. A method as claimed in Claim 1, wherein said first packaged data items have minimum temporal spacings that allow at least a predetermined second packaged data interval therebetween, and wherein said method comprises inhibiting transfer of such second packaged data item when a next first packaged data item is expected to leave a shorter time interval remaining than necessary for such second packaged data interval, wherein said second packaged data items are subject to a maximum length restriction, and said method providing a delay facility for delaying said first packaged data items with a maximum delay interval that is shorter than corresponding to said maximum length, and terminating such inhibiting by triggering transfer of such second packaged data item when a first packaged data item that may be presently in transfer will have terminated through adjusting an instantaneous delay value of said delay facility below said maximum delay interval.

7. A method as claimed in Claims 5 or 6, whilst at the receiver side supplementing the actually incurred variable delay to a combined delay equal to said maximum delay interval.

8. A method as claimed in Claim 1, whilst on said physical-line allowing respective voice channels by assigning thereto different Ethernet serial numbers in one or more predetermined bit positions of such serial numbers.

9. A method as claimed in Claim 2, and supplementing one or more analog television channels thereto in associated different wavelength band(s).

10. A method as claimed in Claim 1, whilst organizing the fibers on one or more patch panels in one or more layers and in groups of a plurality of such fibers, in a manner that allows customers to sign up in a random order while being patched to communication gateways.

11. A transfer apparatus arranged for implementing a method as claimed in Claim 1 for providing a physical-line-based and transparent information transfer facility to distributed information receivers, whilst supporting such transfer for both first packaged data derived from sampling a real-time telephone signal and second packaged data originating from a broadband digital data service,
said apparatus being **characterized by** comprising:
ascertaining means for ascertaining respective actual transfer requirements for said first and second packaged data,
first temporal positioning means for positioning of transferring said first packaged data in first time slots that maintain real-time transferring of said first packaged data relative to said real-time telephone signal;
second temporal positioning means for positioning said second packaged data in intermediate intervals between successive said first time slots;
and transfer means for transferring said first and second packaged data items along said physical-line in a deterministic manner within a single channel facility whilst foregoing encapsulation of said data items in an overall frame.

12. A transfer apparatus as claimed in Claim 11, wherein said first packaged data items have minimum temporal spacings that allow at least one second packaged data item therebetween, and wherein said apparatus comprises inhibiting means for inhibiting transfer of such second packaged data item when a next first packaged data item is expected to leave a shorter time slot remaining than necessary for transfer of such second packaged data item, said inhibiting means having a triggering input for terminating such inhibiting upon receiving a trigger when a first packaged data item that may be presently in transfer will have terminated for thereupon granting transfer of such second package data item.

13. A transfer apparatus as claimed in Claim 12, and having selecting means for in case of a plurality of second packaged data items of respective different lengths actually requiring transfer before a next first packaged data item, overcoming said inhibiting through selecting a relatively shorter second packaged data item for temporal preference over an inhibited longer second packaged data item, when the time slot remaining is sufficient for transfer of such relatively shorter second packaged data item.

14. A transfer apparatus as claimed in Claim 11, wherein said second package data items are subject to a maximum length restriction, and said apparatus comprising a delay facility for delaying said first packaged data items with a maximum delay interval corresponding to said maximum length restriction, said delay facility having a trigger input for receiving a trigger upon terminating transfer of an actual second packaged data item for then triggering transfer of a said first packaged data item through adjusting an instantaneous delay value of said delay facility below said maximum delay interval.

15. A transfer apparatus as claimed in Claim 11, wherein said transfer apparatus comprises a virtual representation means for each said distributed receiver.

16. A transfer apparatus as claimed in Claim 1, for use with a plurality of telephone signals according to a time-divisional multiplex organization.

17. A distributed receiver apparatus being arranged for receiving said first and second packaged data items as transferred by a transfer apparatus as claimed in Claim 11.

18. An overall transfer system being arranged for implementing a method as claimed in Claim 1 and comprising a transfer apparatus as claimed in Claim 11 and a plurality of distributed receiver apparatuses as claimed in Claim 16 interfaced thereto by respective physical-lines.

19. An overall transfer system as claimed in Claim 18, and being operative for bi-directional service on each of a plurality of such physical-lines as disposed between a transfer apparatus as claimed in Claim 11 and multiple distributed receiver apparatuses as claimed in Claim 17, so that said receiver apparatuses have a transmitter function with respect to said transfer apparatus having a receiver function.
